# EUROPÄISCHE PATENTSCHRIFT

(11) **EP 0 860 759 B1**
(45) Veröffentlichungstag und Bekanntmachung des Hinweises auf die Patenterteilung: **24.09.2003**
(21) Anmeldenummer: 98100620.8
(22) Anmeldetag: 15.01.1998
(51) Int. Cl.: G05B 19/4099

(54) **Verfahren und Vorrichtung zur multimedialen Darstellung komplexer Systeme**
Method and device for multimedia visualisation of complex systems
Méthode et dispositif de visualisation multimédia de systèmes complexes

(30) Priorität: 20.02.1997 DE 19706719
(43) Veröffentlichungstag der Anmeldung: 26.08.1998
(73) Patentinhaber: Volkswagen Aktiengesellschaft, 38436 Wolfsburg (DE)
(72) Erfinder: Ernst, Holger, 38124 Braunschweig (DE); Kopp, Olaf, 38120 Braunschweig (DE); Lange, Thomas, 38259 Salzgitter (DE)
(74) Vertreter: Zucker, Volker, Dipl.-Ing.

(56) Entgegenhaltungen:
- EP-A- 0 425 409
- WO-A-95/34866
- DE-A- 4 212 173
- GB-A- 2 190 268
- GB-A- 2 255 661
- US-A- 4 873 643

## Beschreibung

Die Erfindung betrifft ein Verfahren und eine Vorrichtung zur Durchführung des Verfahrens zur multimedialen Darstellung komplexer Systeme.

Aus der GB 2 190 268 A ist ein CAD System bekannt, wobei eine Vielzahl an Basisfiguren auf einem Bildschirm für eine Auswahl und/oder eine Manipulation angezeigt wird, das endgültige Bauteil wird aus einer logischen Kombination der Basisfiguren erhalten. Das System verwendet die CSG Methode und die Elemente eines dreidimensionalen Bauteils werden in einer hierarchischen Struktur derart angeordnet, dass ein höher angeordnetes Element ein anderes, untergeordnetes Element in seinem Koordinatensystem anordnen kann, wobei eine interaktive Funktion zur Anordnung verwendet werden kann. Ein Nutzer kann dabei den Vorgang der Kombination visuell überprüfen.

Aus der DE 42 12 173 A ist eine CAD/CAM Einrichtung mit einer Schichttabelle bekannt, wobei in der Schichttabelle die Schichten in Tabellenform enthalten sind und jede Schicht die Attribute für die Schicht und sonstige Schichten-Bezugnahmeinformationen für sonstige Schichten enthält. Durch Herstellen von Übereinstimmungen zwischen den Figurelementen, den dreidimensionalen Kurven und den dreidimensionalen Formen mit jeweiligen Schichtdaten werden die Figurelemente, die dreidimensionalen Kurven und die dreidimensionalen Formen über die Schichttabelle hierarchisch verwaltet. Ferner sind den jeweiligen Schichtdaten hierarchische Namen zugeteilt. Durch Bezeichnen einer Bearbeitungsschicht an der Wurzel einer hierarchischen Baumdatenstruktur kann die gesamte für die Erzeugung von NC- Daten notwendige Information abgerufen werden.

Aus der WO 95/34866 A ist ein Verfahren und eine Vorrichtung zur Einführung einer intelligenten graphischen Wiedergabe von Elementen in objekt-orientierten Entwicklungssystemen bekannt. Die graphische Wiedergabe eines Elementes auf einem Bildschirm ist dabei abhängig von Schnittstellen und Relativkoordinaten des Elements zu anderen Elementen, welche in einem Konfigurations-Objekt zusammengefasst sind, physikalischen Attributen, welche in einem Beschreibungs-Objekt zusammengefasst sind, und Wiedergabeeigenschaften, welche in einem Modell-Objekt zusammengefasst sind. Konfigurations-Objekt, Beschreibungs-Objekt und Modell- Objekt sind dabei derart verknüpft, dass Wechselwirkungen aufgrund von Veränderungen beispielsweise für eine graphische Wiedergabe berücksichtigt werden.

Insbesondere in der Fertigung komplexer Systeme, wie z.B. Kraftfahrzeuge, Werkzeugmaschinen oder anderer hochwertiger Verbrauchs- und Konsumgüter, ist eine große Anzahl einzelner Teile oder Komponenten zusammenzusetzen. Aufgrund immer stärker ausgeprägter individueller Kundenwünsche sehen sich Produzenten von höherwertigen Verbrauchs- und Konsumgütern, z.B. Kraftfahrzeugen, gezwungen, eine entsprechend große Anzahl von Typen bzw. Varianten anzubieten und zu fertigen. Dies hat zu einem immensen Ansteigen der Bauteile- und Komponentenvielheit geführt, was alleine schon wegen der entsprechenden Lagerhaltung für Produktion und Reparatur zu erhöhten Kosten geführt hat. Daher wurden und werden vielfältige Anstrengungen unternommen, soviel wie möglich identische Teile und Komponenten für die einzelnen Varianten zu verwenden. Allerdings sind dem Grenzen gesetzt, z.B. durch äußere Formgebung oder unterschiedliche Leistungsanforderungen, so dass in der Fertigung noch immer eine Vielzahl ähnlicher Teile Verwendung finden. Dies erfordert eine erhöhte Aufmerksamkeit der in der Produktion tätigen Mitarbeiter, um einen Einbau falscher Bauteile oder Komponenten zu vermeiden. Zur Möglichkeit der Überprüfung hat der Mitarbeiter Stücklisten und/oder Identcheckkarten an seinem Arbeitsplatz, um zu kontrollieren, ob die ihm angelieferten Teile zu dem zu fertigenden Produkt gehören. Dies führt zu einer starken Mehrbelastung der Mitarbeiter und unter den Bedingungen des Produktionsdruckes zu einer erhöhten Fehlerquote. Die falsch eingebauten Teile können jedoch ein sehr großes Sicherheitsrisiko darstellen und müssen daher von einer nachfolgenden Qualitätskontrolle möglichst entdeckt werden. Wie aber leicht ersichtlich ist, können Falschbauteile in untergeordneten Komponenten nicht mehr optisch erkannt werden, sondern müssen über Funktionstests ermittelt werden. Diese sind zum einen zeitaufwendig und zum andern nicht immer zuverlässig, wenn z.B. falsche Schrauben mit nicht ausreichender Festigkeit verwendet wurden.

Der Erfindung liegt daher das Problem zugrunde, eine Vorrichtung und ein Verfahren zu schaffen, mit dem arbeitsplatzspezifisch eine einfache Zuordnung von Teilen und Komponenten zu einem zu fertigenden komplexen System möglich ist.

Die Lösung des Problems ergibt sich durch die Merkmale der Patentansprüche 1 und 7. Weitere vorteilhafte Ausgestaltungen der Erfindung ergeben sich aus den Unteransprüchen.

Hierfür sind Parameter und andere Kenndaten eines komplexen Systems sowie dessen Komponenten hierarchisch in einem Datenspeicher abgelegt, ein Knoten einer untergeordneten Ebene ist über einen Verknüpfungsoperator einem Knoten einer nächsthöheren Ebene zugeordnet und der Verknüpfungsoperator beinhaltet die Anzahl der Knoten im Knoten der nächsthöheren Ebene. Über eine Eingabeeinheit ist ein Knoten einer Hierarchieebene auswählbar und die Hierarchieebene oder der Knoten der Ebene veränderbar. Das komplexe System oder ein Knoten wird auf einer visuellen Ausgabeeinheit dargestellt und die Darstellung ist durch eine Manipulationseinheit manipulierbar, wie z.B. drehbar, vergrößbar etc. Dadurch kann das komplexe System auf einfache und übersichtliche Art und Weise für jemanden mit dem komplexen System Befassenden aufbereitet werden, so daß Unterschiede zu ähnlichen komplexen Systemen leichter erfaßbar sind. So können verhältnismäßig leicht und übersichtlich angelieferte Teile auf ihre richtige Zugehörigkeit zu dem zu fertigenden komplexen System überprüft werden. Damit entfälle insbesondere die umständliche Kontrolle von Stücklisten und Identcheckkarten. Des weiteren lassen sich durch die multimediale Darstellung Funktionszusammenhänge leichter erfassen, so dass bei Einsatz in Produktionsstätten ein fehlerhafter Zusammenbau des komplexen Systems vermieden werden kann.

In einer weiteren Ausführungsform ist die Eingabeeinheit als Tastatur und/oder Computermaus und/oder Touchscreen ausgebildet.

In einer weiteren Ausführungsform ist die Eingabeeinheit in einen Scann-Modus umschaltbar, so daß eine auf dem realen komplexen System aufgebrachte Kodierung über die Eingabeeinheit einscannbar ist.

In einer weiteren Ausführungsform ist der Datenspeicher als CD-Rom und/oder als magnetooptisches Laufwerk ausgebildet.

In einer weiteren Ausführungsform werden über die Eingabeeinheit aufgefundene oder auftretende Fehler eingegeben und diese im Datenspeicher abgespeichert und/oder über eine Netzdatenleitung an eine Zentrale und/oder weitere Vorrichtungen übertragen.

In einer weiteren Ausführungsform wird der Fertigungsablauf des komplexen Systems und/oder der zugehörigen Komponenten als Animation dargestellt.

In einer weiteren Ausführungsform erfolgt die Darstellung des komplexen Systems und seiner Komponenten zweidimensional und/oder perspektivisch, wobei wahlweise zwischen den beiden Darstellungsarten umgeschaltet werden kann.

Die Erfindung wird nachfolgend anhand eines bevorzugten Ausführungsbeispieles näher erläutert. Die Figuren zeigen:

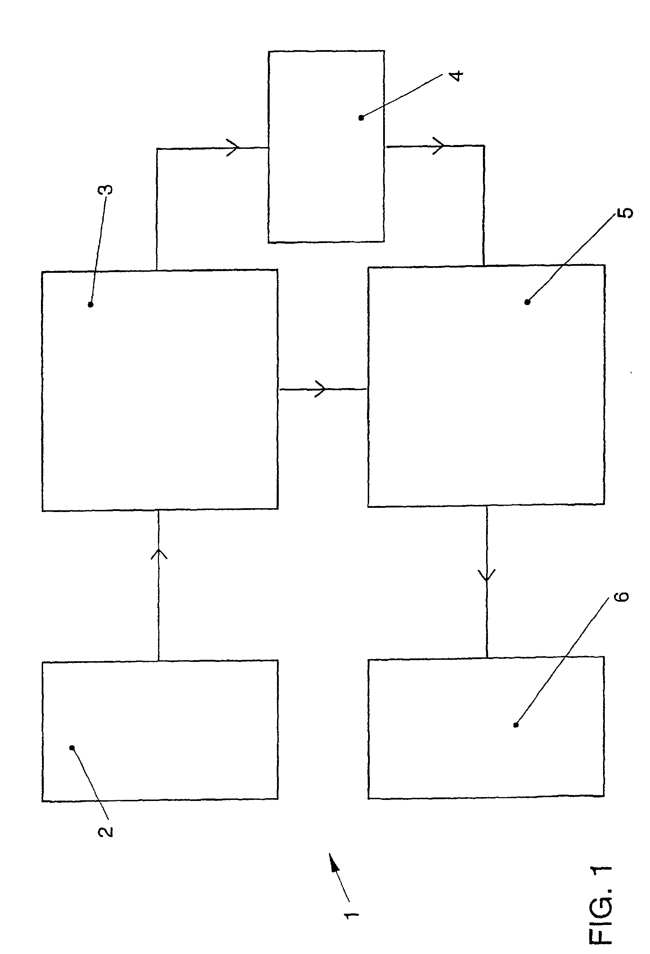

Fig. 1 ein Blockschaltbild der Vorrichtung,
Fig. 2 eine Darstellung der hierarchisch abgelegten Daten eines komplexen Systems,
Fig. 3 eine multimediale Darstellung eines Motors und
Fig. 4 eine Darstellung einer ausgewählten Komponente des Motors.

Die Vorrichtung 1 zur multimedialen Darstellung eines komplexen Systems umfasst eine Eingabeeinheit 2, einen Prozessor 3, einen Datenspeicher 4, eine Manipulationseinheit 5 und eine visuelle Ausgabeeinheit 6. Über die Eingabeeinheit 2 wählt der Benutzer ein komplexes System aus sowie zusätzliche Informationen über das komplexe System, wie später noch näher erläutert wird. Die Eingabeeinheit 2 kann als Tastatur oder Maus oder Touchscreen oder als Kombination derselben ausgebildet sein. Die Eingabeeinheit 2 ist mit dem Prozessor 3 verbunden, der entsprechend der von der Eingabeeinheit 2 weitergegebenen Befehle den Datenspeicher 4 und die Manipulationseinheit 5 ansteuert. Die am Ausgang der Manipulationseinheit 5 anliegenden Daten werden an die visuelle Ausgabeeinheit 6, die im einfachsten Fall als Bildschirm oder Monitor ausgebildet ist, weitergegeben und auf dieser dargestellt. Bei der Ausbildung der Eingabeeinheit 2 als Touchscreen sind Eingabeeinheit 2 und Ausgabeeinheit 6 als ein einziges Bauteil ausgeführt.

Soll nun z.B. ein bestimmter Motor für ein Kraftfahrzeug gefertigt werden, so gibt der Motorenbauer die Typenbezeichnung des Motors über die Eingabeeinheit 2 ein. Der Prozessor 3 wählt dann entsprechend der Typenbezeichnung eine Adresse im Datenspeicher 4 aus, so daß die Informationen für den Motor am Ausgang des Datenspeichers 4 anliegen und der Manipulationseinheit 5 zugeführt werden. Solange kein Manipulationsbefehl über die Eingabeeinheit 2 eingegeben wird, wirkt der Prozessor 3 nicht auf die Manipulationseinheit 5 ein, und die Manipulationseinheit 5 gibt die Daten an die Ausgabeeinheit 6 weiter, wo diese visuell dargestellt werden. Der Motorenbauer sieht also z.B. eine perspektivische Darstellung des ausgewählten Motors sowie eine den Motor charakterisierende Parameterdarstellung, wie z.B. Typenbezeichnung und Teilenummer. Möchte nun der Motorenbauer den Motor aus einer anderen Perspektive sehen, so kann dieser über die Eingabeeinheit 2 einen Manipulationsbefehl, wie z.B. "Drehen", eingeben. Der Prozessor 3 identifiziert den Manipulationsbefehl und steuert entsprechend die Manipulationseinheit 5 an, ohne die Adressierung des Datenspeichers 4 zu ändern. Mittels bekannter Algorithmen der Bildverarbeitung werden die Daten des Datenspeichers 4 entsprechend aufbereitet und an die Ausgabeeinheit 6 ausgegeben. Genauso können selektierte Bereiche der Darstellung singulär dargestellt und vergrößert werden. Weiter besteht die Möglichkeit, den dargestellten Motor sukzessive in seine Einzelteile zu zerlegen, wozu alle Einzelinformationen, wie später noch ausführlich erläutert wird, hierarchisch im Datenspeicher 4 abgelegt sind. So kann z.B. der Motor aus sechs Komponenten bestehen. Durch Selektion mittels der Eingabeeinheit 2 kann eine dieser sechs Komponenten dargestellt werden. Der Selektionsbefehl wird vom Prozessor 3 erkannt und entsprechend wählt dieser die zugehörige Adresse des Datenspeichers 4 aus. Diese Auswahlmöglichkeit ist sehr wichtig, da äußere Unterschiede verschiedener komplexer Systeme nur sehr marginal oder überhaupt nicht sichtbar sind. Da nicht alle Komponenten eines komplexen Systems in der Gesamtdarstellung erkennbar sind, sind alle auswählbaren Komponenten tabellarisch neben der graphischen Darstellung aufgeführt. Die ausgewählte Komponente des Motors ist nun graphisch auf der Ausgabeeinheit 6 dargestellt und kann, wie zuvor beschrieben, manipuliert werden. Weiter besteht die Möglichkeit, zur Gesamtdarstellung des komplexen Systems zurückzukehren, einen Teil oder eine Komponente der ausgewählten Komponente auszuwählen oder zu einer Komponente auf gleicher Ebene zu wechseln. Dadurch kann sehr übersichtlich jedes einzelne Teil des Motors in seinem funktionalen Zusammenhang dargestellt werden. Auf ähnliche Weise kann z.B. mittels einer entsprechenden multimedialen Animation dargestellt werden, was wie in welcher Reihenfolge zusammengesetzt werden muß, um eine Komponente oder das komplexe System zu fertigen. Durch die beschriebene Vorrichtung und dem damit verbundenen Verfahren können so verhältnismäßig leicht und übersichtlich angelieferte Teile auf ihre richtige Zugehörigkeit zu dem zu fertigenden komplexen System überprüft werden.

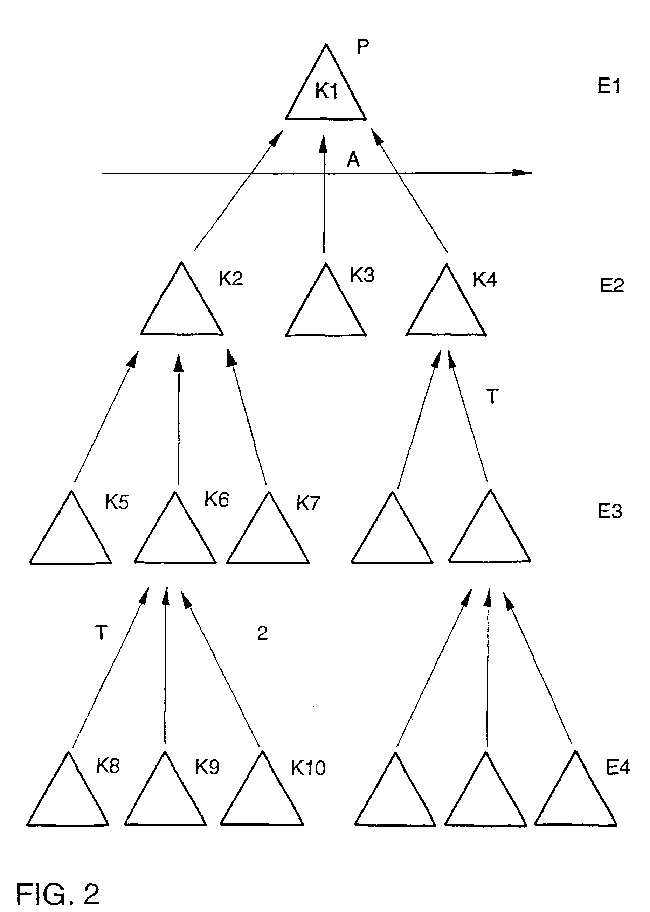

In Fig. 2 ist beispielhaft der Strukturaufbau der im Datenspeicher 4 abgelegten Informationen über das komplexe System dargestellt. Bei dem dargestellten Strukturaufbau sind die Kennzeichnungsdaten der aus Modulen oder Einzelteilen bestehenden Komponenten in Ebenen E1 bis E4 abgespeichert, wobei in der höchsten Ebene E1 die Kennzeichnungsdaten des komplexen Systems als Produkt P selbst abgelegt sind. Die Ebenen E1 bis E4 weisen Knoten K1 - K10 auf, die die Kennzeichnungsdaten einer Komponente beinhalten. Dabei können die Komponenten sowohl Einzelteile, mehrteilige Module oder das Produkt P selbst darstellen. Das Produkt P besteht in seiner letzten Aggregierungsebene E2 aus drei Komponenten, deren Kennzeichnungsdaten in den Knoten K2 bis K4 abgelegt sind. Der Knoten K2 beinhaltet dabei die Kennzeichnungsdaten eines Einzelteils und die Knoten K2 bis K4 die Kennzeichnungsdaten von Modulen. Das Modul des Knotens K2 besteht wiederum genau aus drei Komponenten, deren Kennzeichnungsdaten in den Knoten K5 bis K7 der untergeordneten Ebene E3 abgelegt sind, wobei auch hier der Knoten K6 ein Modul kennzeichnet, das aus drei durch die in den Knoten K8 bis K10 der Ebene E4 beschriebenen unterschiedlichen Einzelteilen besteht. Die Zuordnung der Knoten einer untergeordneten Ebene E2 bis E4 zu der nächstmöglichen Ebene E1 bis E3 erfolgt über die Verknüpfungsoperatoren T, die die Anzahl der Komponenten der untergeordneten Ebene im Knoten der nächsthöheren Ebene beinhalten. So wird z.B. das durch den Knoten K10 gekennzeichnete Einzelteil zweimal in dem durch den Knoten K6 gekennzeichneten Modul benötigt.

Die Ebenen E2 bis E4 stellen vorteilhafterweise Montageschritte bzw. Zulieferebenen dar, wodurch z.B. ein genauer Überblick über die Anlieferung der Komponenten zu der jeweiligen Montagestufe gegeben ist. Über die Reihenfolge der Knoten innerhalb der Aggregierungsebene E2 kann außerdem der Montageablauf des komplexen Systems definiert werden, hier durch den Pfeil A gekennzeichnet.

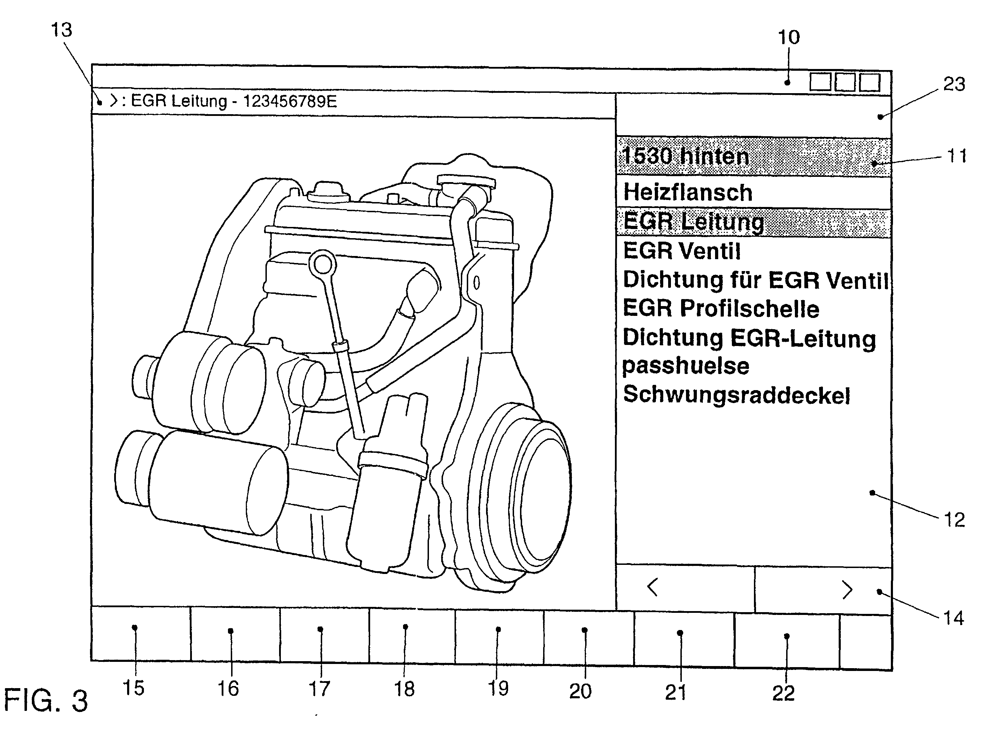

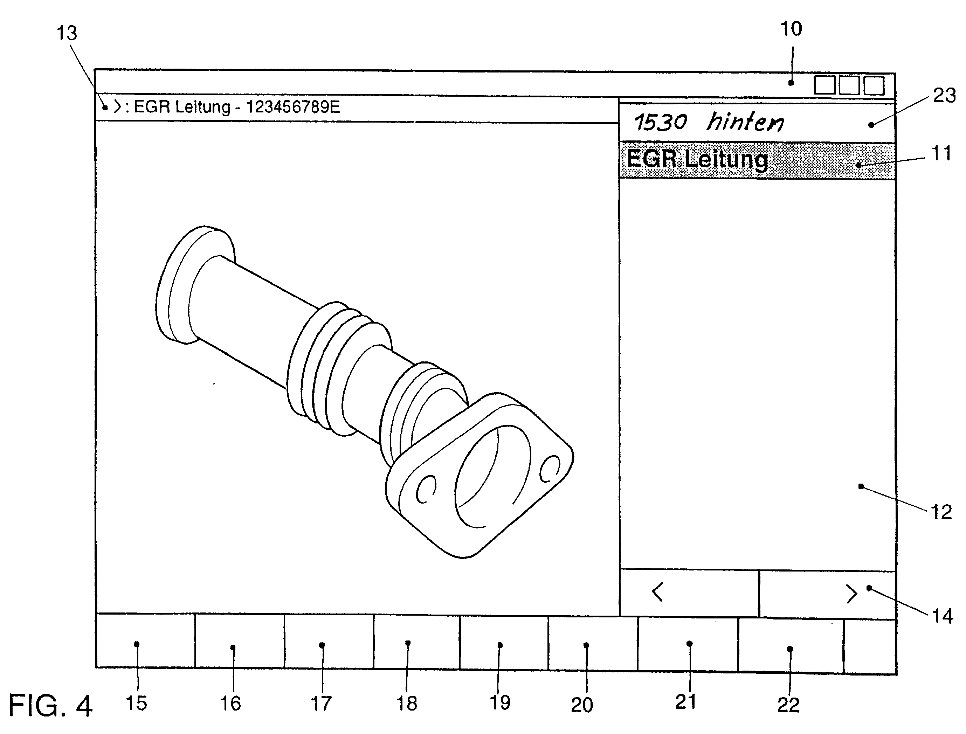

In der Fig. 3 ist ein Motor als komplexes System auf einem Monitor als visuelle Ausgabeeinheit 6 perspektivische dargestellt. Die Benutzeroberfläche 10 stellt dabei sowohl Parameter und Kenndaten als auch Wahlmöglichkeiten für Manipulationsbefehle zur Verfügung. Aus dem Kennfeld 11 kann der Benutzer entnehmen, daß es sich bei dem dargestellten Motor um den Typ 1530 handelt, der in einer perspektivischen Hinteransicht dargestellt ist. Im Kennfeld 12 sind die Komponenten des Motors der nächstniedrigen Hierachieebene E2 alphanumerisch dargestellt, wobei die EGR-Leitung gerade selektiert wurde so daß die EGR-Leitung auf der visuellen Ausgabeeinheit dargestellt wird (Fig. 4). Die Selektion erfolgt dabei direkt über die alphanumerische Darstellung im Kennfeld 12, oder durch anklicken oder berühren der drucksensitiven Oberfläche an der Stelle der EGR-Leitung in der perspektivischen Darstellung. Die aktuell selektierte Komponente wird im Kennfeld 13 mit seiner Bauteilnummer dargestellt. Zur übersichtlicheren Handhabung kann eine Vorauswahl getroffen werden, so daß nur ein Teil der Komponenten im Kennfeld 12 dargestellt werden. So können z.B. Fenster innerhalb der Darstellung definiert werden, so daß alle sich im Fenster befindlichen Komponenten im Kennfeld 12 angezeigt werden, was durch das Bedienfeld 22 realisiert wird. Mit dem Bedienfeld 14 kann die Anzeige im Kennfeld 12, wie von Bildlaufleisten graphischer Oberflächen bekannt, verschoben werden. Mittels des Bedienfeldes 15 wird die Vorrichtung 1 zur multimedialen Darstellung in einen Scann-Modus geschaltet und eine z.B. eine auf dem Zahnriemenschutzlabel des realen Motors aufgebrachte Kodierung eingescannt, so daß die Vorrichtung 1 erkennt, daß es sich bei dem vorliegenden Motor um den Motor-Typ 1530 handelt und diesen auf der visuellen Ausgabeeinheit 6 darstellt. Mittels des Bedienfeldes 16 kann das dargestellte komplexe System oder eine seiner aktuell dargestellten Komponenten in verschiedene Ansichten gedreht werden. Das in der Fig. 3 aktive Bedienfeld 17 ermöglicht die Darstellung selektierter Komponenten auf der visuellen Ausgabeeinheit 6 wie der Übergang von Fig. 3 zu Fig. 4 verdeutlicht. Durch das Bedienfeld 18 kann Art und Reihenfolge des Fertigungsprozesses des Motors auf der visuellen Ausgabeeinheit 6 dargestellt werden. Bedienfeld 19 ermöglicht die graphische Darstellung eines komplexen Systems oder einer Komponente nach Eingabe einer Bauteilnummer. Bedienfeld 20 ermöglicht die graphische Darstellung eines komplexen Systems oder einer Komponente nach Eingabe einer Teilebezeichnung wie z.B. EGR-Leitung. Durch Betätigung von Bedienfeld 21 schaltet die Vorrichtung 1 in den Modus Fehlererfassung um. Durch eine entsprechende Menü-Führung kann der Benutzer auftretende oder erkannte Fehler des komplexen Systems und/oder einer Komponente eingeben und abspeichern, wobei dies vorzugsweise in Form eines Protokolls erfolgt. Durch die Menü-Führung wird der Benutzer "gezwungen" die auftretenden Fehler sehr genau zu spezifizieren, wobei dieser sich an vordefinierte Termini zu halten hat. Dies vereinheitlicht die Fehlerprotokolle, so daß unabhängig von unterschiedlichen Bezeichnungen für auftretende Fehler von unterschiedlichen Benutzern die Fehlerquellen verbessert rückverfolgt werden können. Ist die Fehlerquelle bereits bei der Erfassung eindeutig identifizierbar, so besteht die Option das Fehlerprotokoll direkt an die betreffende Vorrichtung 1 zu übertragen, um die auftretenden Fehler unverzüglich anzuzeigen und wenn möglich abzustellen.

In der Fig. 4 ist die selektierte EGR-Leitung aus Fig. 3 dargestellt. Im Kennfeld 23 ist die höhere Hierachieebene dargestellt, aus der die aktuell dargestellte Komponente ausgewählt wurde. Durch Betätigung dieses Kennfeldes 23 wird in die höhere Hierachieebene gewechselt und die entsprechende Komponente oder das komplexe System wieder dargestellt, aus dem zuvor in die darunterangeordnete Komponente gewechselt wurde. In der Fig. 3 war dieses Kennfeld leer, da der Motor bereits als das komplexe System selbst die höchste Hierachieebene darstellte. Da das Kennfeld 12 leer ist, erkennt der Benutzer, daß es sich bei der EGR-Leitung um ein Einzelteil und um kein Modul handelt und somit bezüglich dieser Komponente die niedrigste Hierachieebene darstellt.

## Patentansprüche

1. Vorrichtung (1) zur multimedialen Darstellung komplexer Systeme in einem Produktionsprozeß, umfassend mindestens eine Eingabeeinheit (2), mindestens eine visuelle Ausgabeeinheit (6), einen Datenspeicher (4), einen den Datenspeicher (4) ansteuernden Prozessor (3) und eine Manipulationseinheit (5), deren Eingang mit dem Datenspeicher (4) und deren Ausgang mit der Ausgabeeinheit (6) verbunden ist und die vom Prozessor (3) gesteuert wird, wobei
- die Parameter und andere Kenndaten des komplexen Systems sowie dessen Komponenten hierarchisch im Datenspeicher (4) abgelegt sind und ein Knoten (Kₘ) einer untergeordneten Ebene (Eₙ) über einen Verknüpfungsoperator (T) einem Knoten (Kₗ) einer nächsthöheren Ebene (Eₙ₋₁) zugeordnet ist und der Verknüpfungsoperator (T) die Anzahl der Knoten (Kₘ) im Knoten (Kₗ) der nächsthöheren Ebene (Eₙ₋₁) beinhaltet,
- über die Eingabeeinheit (2) ein Knoten (Kₘ) einer Hierarchieebene (Eₙ) auswählbar ist,
- über die Eingabeeinheit (2) die Hierarchieebene (Eₙ) oder der Knoten (Kₘ) der Ebene (Eₙ) veränderbar ist, und
- das komplexe System oder ein Knoten (K) auf der visuellen Ausgabeeinheit (6) darstellbar und die Darstellung durch die Manipulationseinheit (5) manipulierbar ist.

2. Vorrichtung nach Anspruch 1, **dadurch gekennzeichnet, daß** die Eingabeeinheit (2) als Tastatur und/oder Computermaus und/oder Touchscreen ausgebildet ist.

3. Vorrichtung nach Anspruch 1 oder 2, **dadurch gekennzeichnet, daß** die Eingabeeinheit (2) in einen Scann-Modus umschaltbar ist, so daß eine auf dem realen komplexen System aufgebrachte Kodierung über die Eingabeeinheit (2). einscannbar ist.

4. Vorrichtung nach einem der vorangegangenen Ansprüche **dadurch gekennzeichnet, daß** der Datenspeicher (4) als CD-Rom und/oder als magnetooptisches Laufwerk ausgebildet ist.

5. Vorrichtung nach einem der vorangegangenen Ansprüche, **dadurch gekennzeichnet, daß** über die Eingabeeinheit (2) aufgefundene oder auftretende Fehler eingebbar sind, die im Datenspeicher (4) abspeicherbar und/oder über eine Netzdatenleitung an eine Zentrale und/oder weitere Vorrichtungen (1) übertragbar sind.

6. Vorrichtung nach einem der vorangegangenen Ansprüche **dadurch gekennzeichnet, daß** das komplexe System und seine Komponenten auf der visuellen Ausgabeeinheit (6) wahlweise zweidimensional oder perspektivisch darstellbar sind.

7. Verfahren zur multimedialen Darstellung komplexer Systeme, umfassend folgende Verfahrensschritte:
a. Auswahl eines beliebigen Knotens (Kₘ) einer Hierarchieebene (Eₙ) eines komplexen Systems durch Betätigung einer Eingabeeinheit (2), wobei der Knoten (Kₘ) einer untergeordneten Ebene (Eₙ) über einen Verknüpfungsoperator (T) einem Knoten (Kₗ) einer nächsthöheren Ebene (Eₙ₋₁) zugeordnet ist und der Verknüpfungsoperator (T) die Anzahl der Knoten (Kₘ) im Knoten (Kₗ) der nächsthöheren Ebene (Eₙ₋₁) beinhaltet,
b. Darstellung des ausgewählten komplexen Systems in der Hierarchieebene (Eₙ) und wahlweise der Komponenten der darunter angeordneten Hierarchieebene (E_{n+1, ... ,} Eₙ₊ₓ) durch eine visuelle Ausgabeeinheit (6) und wahlweise
c. Manipulation der Darstellung des komplexen Systems und/oder Wechsel in eine untergeordnete Hierarchieebene (Eₙ₊₁) und wahlweise
d. Manipulation der Darstellung des komplexen Systems und/oder Wechsel in die nächsthöheren Ebene (Eₙ₋₁) oder eine untergeordnete Hierarchieebene (Eₙ₊ₓ) oder Wechsel zu einem anderen Knoten (K) innerhalb der Hierarchieebene (Eₙ).

8. Verfahren nach Anspruch 7, **dadurch gekennzeichnet, daß** die Eingabeeinheit (2) in einen Scann-Modus umgeschaltet wird und eine Kodierung des komplexen System über die Eingabeeinheit (2) eingescannt wird.

9. Verfahren nach Anspruch 7 oder 8, **dadurch gekennzeichnet, daß** aufgefundene oder aufgetretene Fehler während des Verfahrens über die Eingabeeinheit (2) eingegeben und diese abgespeichert und/oder an eine Zentrale und/oder weitere Vorrichtungen (1) übertragen werden.

10. Verfahren nach einem der Ansprüche 7 bis 9, **dadurch gekennzeichnet, daß** der Fertigungsablauf des komplexen Systems und/oder der zugehörigen Komponenten als Animation dargestellt wird.

11. Verfahren nach einem der Ansprüche 7 bis 10, **dadurch gekennzeichnet, daß** die Darstellung des komplexen Systems und seiner Komponenten zweidimensional und/oder perspektivisch erfolgt und wahlweise zwischen den beiden Darsteltungsarten umgeschaltet werden kann.

## Claims

1. Apparatus (1) for multimedia visualization of complex systems in a production process, comprising at least one input unit (2), at least one visual output unit (6), a data memory (4), a processor (3) which drives the data memory (4), and a manipulation unit (5) whose input is connected to the data memory (4) and whose output is connected to the output unit (6), and which is controlled by the processor (3), in which
- the parameters and other characteristic data for the complex system as well as its components being stored hierarchically in the data memory (4), and a node (Kₘ) in a subordinate level (Eₙ) being associated via a linking operator (T) with a node (Kₗ) in a next-higher level (Eₙ₋₁), and the linking operator (T) including the number of nodes (Kₘ) in the node (Kₗ) in the next-higher level (Eₙ₋₁),
- a node (Kₘ) in a hierarchy level (Kₘ) can be selected via the input unit (2),
- the hierarchy level (Eₙ) or the node (Kₘ) in the level (Eₙ) can be changed via the input unit (2), and
- the complex system or a node (K) can be visualized on the visual output unit (6), and the visualization can be manipulated by means of the manipulation unit (5).

2. Apparatus according to Claim 1, **characterized in that** the input unit (2) is in the form of a keyboard and/or a computer mouse and/or a touchscreen.

3. Apparatus according to Claim 1 or 2, **characterized in that** the input unit (2) can be switched to a scan mode, such that a coding which is applied to the real complex system can be scanned in via the input unit (2).

4. Apparatus according to one of the preceding claims, **characterized in that** the data memory (4) is in the form of a CD-ROM and/or a magnetooptical disc drive.

5. Apparatus according to one of the preceding claims, **characterized in that** faults which have been found or have occurred can be entered via the input unit (2), can be stored in the data memory (4) and/or can be transmitted via a network data line to a control centre and/or to further apparatuses (1).

6. Apparatus according to one of the preceding claims, **characterized in that** the complex system and its components can optionally be visualized two-dimensionally or in perspective on the visual output unit (6).

7. Method for multimedia visualization of complex systems, comprising the following method steps:
a. Selection of any desired node (Kₘ) in a hierarchy level (Eₙ) of a complex system by operation of an input unit (2), with the node (Kₘ) in a subordinate level (Eₙ) being associated via a linking operator (T) with a node (Kₗ) in a next-higher level (Eₙ₋₁), and the linking operator (T) including the number of nodes (Kₘ) in the node (Kₗ) in the next-higher level (Eₙ₋₁),
b. Visualization of the selected complex system in the hierarchy level (Eₙ) and, optionally, of the components in the hierarchy level (Eₙ₊₁, ..., Eₙ₊ₓ) arranged underneath this, by means of a visual output unit (6) and, optionally,
c. Manipulation of the visualization of the complex system and/or a change to a subordinate hierarchy level (Eₙ₊₁) and, optionally,
d. Manipulation of the visualization of the complex system and/or a change to the next-higher level (Eₙ₋₁) or to a subordinate hierarchy level (Eₙ₊ₓ), or a change to another node (K) within the hierarchy level (Eₙ).

8. Method according to Claim 7, **characterized in that** the input unit (2) is switched to a scan mode, and a coding for the complex system is scanned in via the input unit (2).

9. Method according to Claim 7 or 8, **characterized in that** faults which have been found or have occurred during the method are entered via the input unit (2), are stored and/or are transmitted to a control centre and/or to further apparatuses (1).

10. Method according to one of Claims 7 to 9, **characterized in that** the production sequence for the complex system and/or for the associated components is displayed as an animation.

11. Method according to one of Claims 7 to 10, **characterized in that** the visualization of the complex system and of its components is two-dimensional and/or in perspective form, and it is possible to switch between the two visualization modes selectively.

## Revendications

1. Dispositif (1) de représentation multimédia de systèmes complexes dans un processus de production comprenant au moins une unité de saisie (2), au moins une unité de sortie visuelle (6), une mémoire de données (4), un processeur (3) commandant la mémoire (4) et une unité de manipulation (5) dont l'entrée est reliée à la mémoire de données (4) et dont la sortie est reliée à l'unité de sortie (6) et qui est pilotée par le processeur (3), dans lequel
- on dépose hiérarchiquement les paramètres et autres caractéristiques du système complexe de même que ses composantes dans la mémoire de données (4) et on attribue un noeud (Kₘ) d'un plan subordonné (Eₙ) à un noeud (Kₗ) d'un plan immédiatement supérieur (Eₙ₋₁) au moyen d'un opérateur de liaison (T) et l'opérateur de liaison (T) contient le nombre de noeuds (Kₘ) dans le noeud (Kₗ) du plan immédiatement supérieur (Eₙ₋₁),
- on peut choisir un noeud (Kₘ) d'un plan hiérarchique (Eₙ) au moyen de l'unité de saisie (2),
- on peut modifier le plan hiérarchique (Eₙ) ou le noeud (Kₘ) du plan (Eₙ) au moyen de l'unité de saisie (2), et
- on peut représenter le système complexe ou un noeud (K) sur l'unité de sortie visuelle (6) et on peut manipuler la représentation à l'aide de l'unité de manipulation (5).

2. Dispositif selon la revendication 1, **caractérisé en ce que** l'unité de saisie (2) est développée sous la forme d'un clavier et/ou d'une souris d'ordinateur et/ou d'un écran tactile.

3. Dispositif selon la revendication 1 ou 2, **caractérisé en ce que** l'unité de saisie (2) peut être commutée en mode balayage de manière à pouvoir saisir par balayage, au moyen de l'unité de saisie (2), un codage appliqué sur le système complexe réel.

4. Dispositif selon une des revendications précédentes, **caractérisé en ce que** la mémoire de données (4) est développée sous la forme d'un lecteur de CD-Rom et/ou d'un lecteur magnéto-optique.

5. Dispositif selon une des revendications précédentes, **caractérisé en ce que** l'unité de saisie (2) permet de saisir des erreurs diagnostiquées ou survenues qui peuvent être mémorisées dans la mémoire de données (4) et/ou qui peuvent être transmises au moyen d'une liaison de données d'un réseau vers une centrale et/ou vers d'autres dispositifs (1).

6. Dispositif selon une des revendications précédentes, **caractérisé en ce qu'**on peut représenter le système complexe et ses composantes sur l'unité de sortie visuelle (6) au choix en mode bidimensionnel ou en perspective.

7. Procédé de représentation multimédia de systèmes complexes comprenant les étapes suivantes du procédé :
a. choix d'un noeud (Kₘ) quelconque d'un plan hiérarchique (Eₙ) d'un système complexe en actionnant une unité de saisie (2), dans lequel on attribue le noeud (Kₘ) d'un plan subordonné (Eₙ) à un noeud (Kₗ) d'un plan immédiatement supérieur (Eₙ₋₁) au moyen d'un opérateur de liaison (T) et dans lequel l'opérateur de liaison (T) contient le nombre de noeuds (Kₘ) dans le noeud (Kₗ) du plan immédiatement supérieur (Eₙ₋₁),
b. représentation du système complexe choisi dans le plan hiérarchique (Eₙ) et, au choix, des composantes du plan hiérarchique disposé juste au-dessous (Eₙ₊₁, ... , Eₙ₊ₓ) à l'aide d'une unité de sortie visuelle (6) et au choix
c. manipulation de la représentation du système complexe et/ou changement dans un plan hiérarchique subordonné (Eₙ₊₁) et au choix
d. manipulation de la représentation du système complexe et/ou changement dans un plan immédiatement supérieur (Eₙ₋₁) ou dans un plan hiérarchique subordonné (Eₙ₊ₓ) ou changement vers un autre noeud (K) à l'intérieur du plan hiérarchique (Eₙ).

8. Procédé selon la revendication 7, **caractérisé en ce que** l'unité de saisie (2) est commutée en mode balayage de manière à pouvoir saisir par balayage un codage du système complexe au moyen de l'unité de saisie (2).

9. Procédé selon la revendication 7 ou 8, **caractérisé en ce que** l'unité de saisie (2) permet de saisir des erreurs diagnostiquées ou survenues pendant le procédé qui sont mémorisées et/ou transmises vers une centrale et/ou vers d'autres dispositifs (1).

10. Procédé selon une des revendications 7 à 9, **caractérisé en ce que** le processus de fabrication du système complexe et/ou de ses composantes est représenté sous la forme d'une animation.

11. Procédé selon une des revendications 7 à 10, **caractérisé en ce que** la représentation du système complexe et de ses composantes est réalisée en mode bidimensionnel et/ou en perspective et **en ce qu'**on peut la commuter au choix entre les deux modes de représentation.
